# FASCICULE DE BREVET EUROPEEN

(11) **EP 0 426 509 B1**
(45) Date de publication et mention de la délivrance du brevet: **21.07.1993**
(21) Numéro de dépôt: 90402580.6
(22) Date de dépôt: 19.09.1990
(51) Int. Cl.: B60T 8/18

(54) **Capteur de charge instantanée d'un véhicule automobile**
Messgerät für die augenblickliche Last für ein Kraftfahrzeug
Measuring instrument for the immediate load for a motor vehicle

(30) Priorité: 31.10.1989 FR 8914252
(43) Date de publication de la demande: 08.05.1991
(73) Titulaire: ALLIEDSIGNAL EUROPE SERVICES TECHNIQUES, 93700 Drancy (FR)
(72) Inventeur: Castel, Philippe, Bendix Europe Serv. Techniques, F-93700 Drancy (FR)
(74) Mandataire: Bentz, Jean-Paul

(56) Documents cités:
- EP-A- 0 261 011
- EP-A- 0 283 328
- BE-A- 658 476

## Description

La présente invention concerne un capteur de charge instantanée d'un véhicule, intégré à un ensemble de suspension de ce véhicule comprenant un élément de suspension fixé par l'intermédiaire d'un moyen élastique à un tube creux et borgne rempli d'un fluide et porté par une chape, un capteur de pression, sensible à la pression dudit fluide, étant disposé à une extrémité de ce tube.

Un capteur de ce type est décrit dans le document BE-A-658 476 pour les véhicules ferroviaires.

Ce dispositif connu présente plusieurs caractéristiques propres à son application spécifiques et s'avère en pratique inutilisable pour les véhicules automobiles.

En particulier, ce dispositif connu fait appel à un ressort annulaire dont la réalisation est délicate et coûteuse, ainsi qu'à un capteur de pression basé sur le principe du tube de Bourdon qui n'est adapté qu'aux pressions élevées et pose des problèmes de corrosion et d'entretien.

Le but de la présente invention est de proposer un capteur du type précédemment mentionné qui soit applicable aux véhicules automobiles.

A cette fin, le capteur de l'invention est essentiellement caractérisé par les caractéristiques de la deuxième partie de la revendication unique.

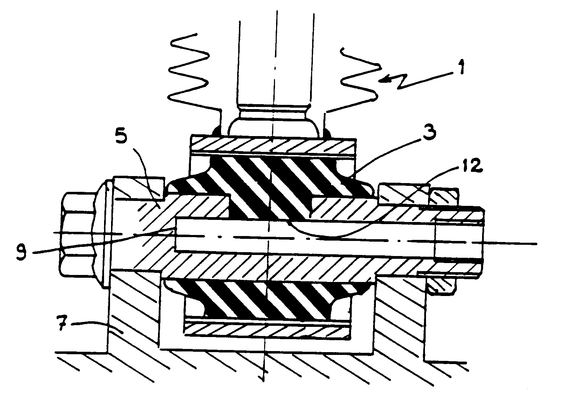

L'invention sera mieux comprise et d'autres buts, avantages et caractéristiques de celle-ci apparaîtront plus clairement à la lecture de la description qui suit d'un mode de réalisation donné à titre non limitatif et à laquelle une planche de dessin est annexée sur laquelle la Figure unique représente schématiquement une extrémité d'un élément de suspension et le capteur selon la présente invention.

En référence maintenant à cette Figure, l'élément de suspension 1 est fixé par l'intermédiaire d'un moyen élastique 3, généralement du caoutchouc à une tige 5 portée par une chape 7.

Le moyen élastique 3 permet d'éviter de transmettre bruits et vibrations à la chape 7 et autorise certains déplacements relatifs entre la chape 7 et l'élément de suspension 1.

La tige 5 selon l'invention est un tube creux borgne, donc fermé à une extrémité 9, l'extrémité ouverte du tube étant prévue pour recevoir un capteur de pression (non représenté) de type conventionnel, venant fermer de façon étanche le tube 5. Une lumière 12 est pratiquée dans le tube 5 sensiblement en regard de l'élément de suspension 1 et dans l'axe de celui-ci.

Ainsi le moyen élastique 3 pénètre dans la lumière 12 en fonction de la charge instantanée reçue. La modification de la pression du fluide dans le tube creux en résultant est alors détectée par le capteur de pression fermant ce tube et est représentative de la charge reçue par la roue ainsi équipée.

L'homme du métier comprendra qu'ainsi tout type de capteur de pression, jauge de contrainte, capteur piezo-électrique, capteur hydraulique, ou équivalent peut être adapté au tube creux 5. Le capteur de pression peut également être constitué par l'élément de pilotage de la valve d'un correcteur de freinage. En outre le tube peut équiper aussi bien le point inférieur que le point supérieur d'une suspension à amortisseur ou même le point d'accrochage de lames de ressort.

On constate donc que l'élément de suspension n'est nullement affecté par le capteur selon l'invention et peut être de tout type disponible sur le marché. En outre, d'encombrement très réduit, ce capteur est facile à disposer en chaine sur le véhicule et ne nécessite nulle manipulation de ressorts multiples.

Bien évidemment l'homme de l'art pourra apporter de multiples changements sans sortir du cadre de l'invention tel que défini par la revendication annexée.

## Revendications

1. Capteur de charge instantanée d'un véhicule, intégré à un ensemble de suspension de ce véhicule comprenant un élément de suspension (1) fixé par l'intermédiaire d'un moyen élastique (3) à un tube creux et borgne rempli d'un fluide et porté par une chape, un capteur de pression, sensible à la pression dudit fluide, étant disposé à une extrémité de ce tube, caractérisé en ce qu'une lumière (12) a été pratiquée sensiblement dans l'axe et en regard de l'élément de suspension (1) d'un véhicule automobile, de manière à permettre au moyen élastique (3) de pénétrer à l'intérieur dudit tube (5), et en ce que le capteur ferme hermétiquement l'extrémité ouverte dudit tube (5).

## Claims

1. Instantaneous load sensor of a vehicle, incorporated in a suspension assembly of this vehicle and comprising a suspension element (1) fastened via an elastic means (3) to a blind hollow tube filled with a fluid and carried by a yoke, a pressure sensor sensitive to the pressure of said fluid being arranged at one end of this tube, characterized in that a slot (12) has been made substantially in the axis of and opposite the suspension element (1) of a motor vehicle so as to allow the elastic means (3) to penetrate into said tube (5), and in that the sensor hermetically closes the open end of said tube (5).

## Patentansprüche

1. Meßvorrichtung für die augenblickliche Last eines Fahrzeugs, integriert in eine Aufhängungsgruppe des Fahrzeugs, mit einem Aufhängungselement (1), das mit Hilfe eines elastischen Mittels (3) an einem hohlen Blindrohr befestigt ist, das mit einem Fluid gefüllt ist und von einem Bügel gehalten ist, einem für den Druck des Fluids empfindlichen Druckfühler, der an einem Ende dieses Rohrs angeordnet ist, dadurch gekennzeichnet, daß in der Achse mit Ausrichtung auf das Aufhängungselement (1) eines Kraftfahrzeugs ein Loch (12) derart angebracht ist, daß das elastische Mittel (3) in das Innere des Rohrs (5) eindringen kann, und daß der Fühler das offene Ende des Rohrs (5) hermetisch abschließt
